(19) Europäisches Patentamt / European Patent Office / Office européen des brevets

(11) **EP 3 006 716 B1**

(12) **FASCICULE DE BREVET EUROPEEN**

(45) Date de publication et mention de la délivrance du brevet:
**27.12.2017 Bulletin 2017/52**

(51) Int Cl.:
*F02D 41/22* *(2006.01)*　　*F02M 25/08* *(2006.01)*
*F02D 41/00* *(2006.01)*　　*F02D 41/24* *(2006.01)*

(21) Numéro de dépôt: **15188891.4**

(22) Date de dépôt: **08.10.2015**

(54) **PROCÉDÉ DE COMMANDE D'UN MOTEUR À COMBUSTION INTERNE MUNI D'UN DISPOSITIF DE TRAITEMENT DE GAZ**

VERFAHREN ZUR STEUERUNG EINES VERBRENNUNGSMOTORS, DER MIT EINER GASAUFBEREITUNGSVORRICHTUNG AUSGESTATTET IST

METHOD FOR CONTROLLING AN INTERNAL COMBUSTION ENGINE PROVIDED WITH A GAS-TREATMENT DEVICE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **09.10.2014 FR 1459671**

(43) Date de publication de la demande:
**13.04.2016 Bulletin 2016/15**

(73) Titulaire: **Renault S.A.S.**
**92100 Boulogne-Billancourt (FR)**

(72) Inventeurs:
• **MIGNOT, Celanie**
  **75012 PARIS (FR)**
• **KIEFFER, Steve**
  **91220 BRETIGNY SUR ORGE (FR)**
• **PAILLARD, Jerome**
  **91660 MEREVILLE (FR)**

(56) Documents cités:
DE-A1- 19 755 401　　US-A1- 2007 199 372
US-A1- 2013 184 972

**Description**

L'invention a pour domaine technique la commande d'un moteur à combustion interne et plus particulièrement la commande d'un tel moteur muni d'un canister.

Dans le cadre des normes appliquées aux constructeurs automobiles concernant l'évaporation du carburant, tout véhicule automobile doit comprendre un dispositif de traitement de gaz et en particulier des vapeurs de carburant pour limiter les émissions d'hydrocarbures vers l'atmosphère. Ce dispositif de traitement des vapeurs de carburant, appelé canister, peut être une boite à charbon actif. Le canister absorbe les vapeurs de carburant provenant du réservoir de carburant. Afin que ce dispositif reste efficace, il est nécessaire de le purger régulièrement. Le débit de purge provenant du canister est renvoyé à l'admission du moteur et influence alors le fonctionnement du moteur car ce dernier aspire alors un mélange air-carburant qui participe à la combustion, en plus de l'air admis par le circuit d'admission d'air et du carburant injecté par les injecteurs. Pour garantir un fonctionnement correct du moteur et des émissions de polluants conformes à la réglementation, il est nécessaire de connaître le débit d'air et de vapeurs de carburant provenant de la purge, ceci afin d'adapter les consignes données aux actionneurs du moteur, notamment au niveau du boîtier-papillon permettant de régler le débit d'air via l'angle d'ouverture, et au niveau des injecteurs pour régler le débit de carburant via le temps d'injection.

L'estimation du débit circulant au travers de la vanne de purge du canister est déterminée dans le calculateur par un estimateur utilisant l'équation de débit dite de Barré Saint Venant.

Cette équation relie les conditions de pression et de température en amont d'une vanne (conditions dites de réservoir) avec la section efficace de passage du fluide et les conditions de pression en aval de la vanne pour déterminer le débit massique qui passe à travers cette vanne.

$$Q = \frac{P_{amont} \times S_{eff}}{\sqrt{T_{amont}}} \times Cfe_{BSV}\left(\frac{P_{aval}}{P_{amont}}\right) \qquad (\text{Eq. 1})$$

Avec :

$$Cfe_{BSV} = \left(\sqrt{\frac{\gamma}{R}} * \left[\frac{2}{\gamma+1}\right]^{\gamma+1/2(\gamma-1)}\right) \qquad (\text{Eq. 2})$$

$S_{eff}$ = section efficace débitante de la vanne de purge canister
$P_{amont}$ = Pression en amont de la vanne de purge canister
$T_{amont}$ = Température en amont de la vanne de purge canister
$P_{aval}$ = Pression en aval de la vanne de purge canister
$\gamma$ = rapport des capacités thermiques à pression constante Cp et à volume constant Cv
R = Constante des gaz parfaits

Ce calcul est très dépendant de la section efficace débitante $S_{eff}$ de la vanne de purge canister.

Cette section est obtenue à partir d'une courbe reliant le rapport de cycle d'ouverture appliqué à la vanne à la section efficace débitante de celle-ci, c'est ce qu'on appelle la courbe aéraulique de la vanne.

Toute modification de cette courbe (dispersion de fabrication, encrassement, vieillissement, etc.) a un effet sur l'estimation du débit de purge canister calculé, et introduit un biais sur le débit d'air et de carburant dans le moteur, avec des problèmes de performance et de pollution. US 2007/0199372 A1 divulgue un dispositif de traitement de gaz, dans lequel le débit de gaz traversant la vanne de purge calculé est corrigé. De l'état de la technique antérieur, on connait le document FR2907851 qui décrit la correction de la section aéraulique d'un papillon ou une vanne de régulation du débit d'air moteur. Toutefois, le procédé de correction de la courbe aéraulique décrit dans ce document n'est pas utilisable directement dans le cas présent, car la vanne de purge canister ne fonctionne pas seule mais en combinaison avec un boîtier-papillon du moteur et un système d'injection (notamment les injecteurs).

On connait également les documents US2013-184972 et US2009-100828 qui ne résolvent toutefois pas les déficiences relevées ci-dessus.

Il existe donc un besoin pour un procédé permettant d'isoler l'influence de la vanne de purge canister des autres défauts.

EP 3 006 716 B1

Un objet de l'invention est un procédé de commande d'un moteur à combustion interne muni d'un dispositif de traitement de gaz apte à récolter les vapeurs de carburant provenant d'un réservoir de carburant et comprenant une conduite de sortie connectée au collecteur d'admission du moteur à combustion interne, une vanne de purge étant disposée sur la conduite de sortie du dispositif de traitement, le moteur à combustion interne étant par ailleurs alimenté par une conduite d'admission d'air frais munie d'une vanne papillon, un capteur de pression étant apte à déterminer la pression dans le collecteur d'admission.

Le procédé comprend les étapes suivantes :

on ferme la vanne de purge et l'on réalise un apprentissage des défauts du système d'injection de carburant,
on réalise un apprentissage des défauts de section aéraulique de la vanne papillon,
on ouvre la vanne de purge afin de vider le dispositif de traitement du carburant et des gaz qu'il contient,
lorsque le dispositif de traitement ne comporte plus de vapeur de carburant, on réalise l'apprentissage de la section de la vanne de purge, la vanne étant maintenue ouverte pour réaliser cet apprentissage,
on détermine la section aéraulique corrigée de la vanne de purge en déterminant un facteur correctif fonction d'une consigne de pression de collecteur et d'une pression de collecteur modélisée avec purge ou en utilisant une dérive de richesse.

Pour apprendre les défauts du système d'injection, on peut commander le moteur de sorte qu'il fonctionne à la stoechiométrie,
on peut déterminer un signal d'erreur égale à la différence entre la mesure d'une sonde de richesse montée à l'échappement du moteur à combustion interne et une consigne de richesse correspondant à la richesse unité, et
on peut corriger la durée d'injection en fonction de ce signal d'erreur.

Pour apprendre les défauts de la section aéraulique de la vanne papillon lors d'un point de fonctionnement moteur sans purge, après avoir appris les défauts du système d'injection, on peut réaliser les étapes suivantes :

on détermine la consigne de section d'ouverture de la vanne papillon à partir de l'équation de Barré Saint Venant, en fonction notamment du débit d'air frais,
on détermine une consigne de degré d'ouverture correspondant à la consigne de section d'ouverture de la vanne papillon en fonction d'une première cartographie,
on reconstitue par l'intermédiaire d'une stratégie de prédiction de pression une pression collecteur modélisée sans purge canister à partir de la mesure de l'ouverture de la vanne papillon, et
on détermine un premier facteur correctif appliqué à l'ouverture de la vanne papillon en fonction de la consigne de pression de collecteur et de la pression de collecteur modélisée sans purge.

Pour réaliser l'apprentissage de la section aéraulique de la vanne de purge lors d'un point de fonctionnement moteur après une purge, après avoir réalisé l'apprentissage des défauts du système d'injection et des défauts de la section aéraulique de la vanne papillon, on peut réaliser les étapes suivantes :

on détermine la section aéraulique de la vanne de purge en fonction du débit de purge déterminé par une stratégie de purge et de l'équation de Barré Saint Venant,
on détermine le rapport cyclique d'ouverture de la vanne de purge en fonction de la section aéraulique de la vanne de purge et d'une cartographie donnant la correspondance entre le rapport cyclique d'ouverture appliqué et la section aéraulique de la vanne de purge,
on détermine une pression collecteur modélisée avec purge à partir de la section aéraulique estimée,
on détermine un deuxième facteur correctif en fonction de la consigne de pression collecteur et de la pression collecteur modélisée avec purge, puis
on applique le deuxième facteur correctif au rapport cyclique d'ouverture de la vanne de purge.

Pour réaliser l'apprentissage de la section aéraulique de la vanne de purge lors d'un point de fonctionnement moteur après une purge, après avoir réalisé l'apprentissage des défauts du système d'injection et des défauts de la section aéraulique de la vanne papillon, on peut réaliser les étapes suivantes :

on détermine un coefficient d'erreur moyenne de débit d'air à la richesse courante en fonction de mesures de richesse,
on détermine un débit d'air corrigé en fonction du coefficient d'erreur moyenne de débit d'air à la richesse courante, et du débit d'air estimé,
on détermine l'erreur du débit de purge en fonction de l'erreur de débit d'air et du débit total d'air admis, et
on détermine une section aéraulique corrigée de la vanne de purge au rapport cyclique d'ouverture donné par application de l'équation de Barré Saint Venant à l'erreur du débit de purge.

D'autres buts, caractéristiques et avantages de l'invention apparaîtront à la lecture de la description suivante, donnée uniquement à titre d'exemple non limitatif et faite en référence aux dessins annexés sur lesquels :

- la figure 1 illustre les principaux éléments de l'alimentation en air d'un moteur à combustion interne muni d'un dispositif de traitement de gaz,
- la figure 2 illustre les principaux éléments du mélange de l'air admis et des vapeurs de carburant du dispositif de traitement de gaz,
- la figure 3 illustre les principales étapes du procédé de correction des dérives de la section aéraulique de la vanne de purge, et
- la figure 4 illustre les principales sous étapes d'un premier mode de réalisation de l'apprentissage de l'erreur de la vanne papillon et de la vanne de purge.

Le moteur à combustion interne est alimenté en air frais par la conduite d'admission d'air frais 1 et en vapeurs de carburant par la conduite 2 provenant d'un dispositif de traitement de gaz 3a appelé par la suite canister, connecté à un réservoir de carburant 3b. La conduite d'admission d'air frais 1 est munie d'une vanne papillon 4. La conduite 2 provenant du canister 3a est munie d'une vanne 5 de purge canister.

La conduite d'admission d'air frais 1 et la conduite 2 provenant du canister sont reliées directement au collecteur d'admission 7 du moteur à combustion interne 8. Alternativement, la conduite 2 provenant du canister peut être piquée sur la conduite 1 d'admission d'air frais entre la vanne papillon 4 et le collecteur d'admission 7.

Un capteur de pression 6 est disposé de sorte à mesurer la pression dans le collecteur d'admission 7.

Enfin, une unité de commande électronique 9 est reliée à la vanne papillon 4, à la vanne 5 de purge canister et au capteur de pression 6.

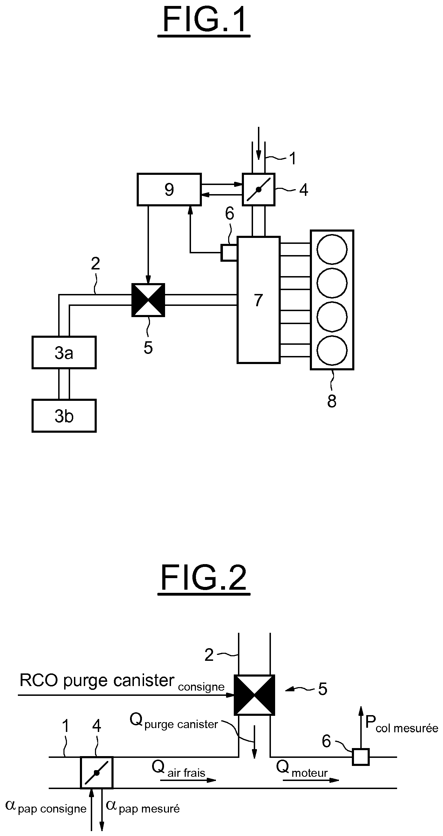

La figure 2 illustre les principaux éléments du mélange de l'air admis et des vapeurs de carburant du canister. La figure 2 illustre l'alternative décrite ci-dessus en rapport avec la figure 1, dans laquelle la conduite 2 provenant du canister est piquée sur la conduite 1 d'admission d'air frais entre la vanne papillon 4 et le collecteur d'admission 7.

La vanne papillon 4 d'admission d'air frais reçoit de l'unité de commande électronique 9 une consigne de degré d'ouverture $a_{pap\ consigne}$ et est apte à émettre une mesure du degré d'ouverture $a_{pap\ mesuré}$.

La vanne 5 de purge canister est commandée par un rapport cyclique d'ouverture (acronyme RCO) noté $RCO_{purge\ canister\ consigne}$ reçu de l'unité de commande électronique 9.

Le capteur de pression 6 émet une mesure de la pression en amont du collecteur d'admission $P_{col\ mesurée}$. à destination de l'unité de commande électronique.

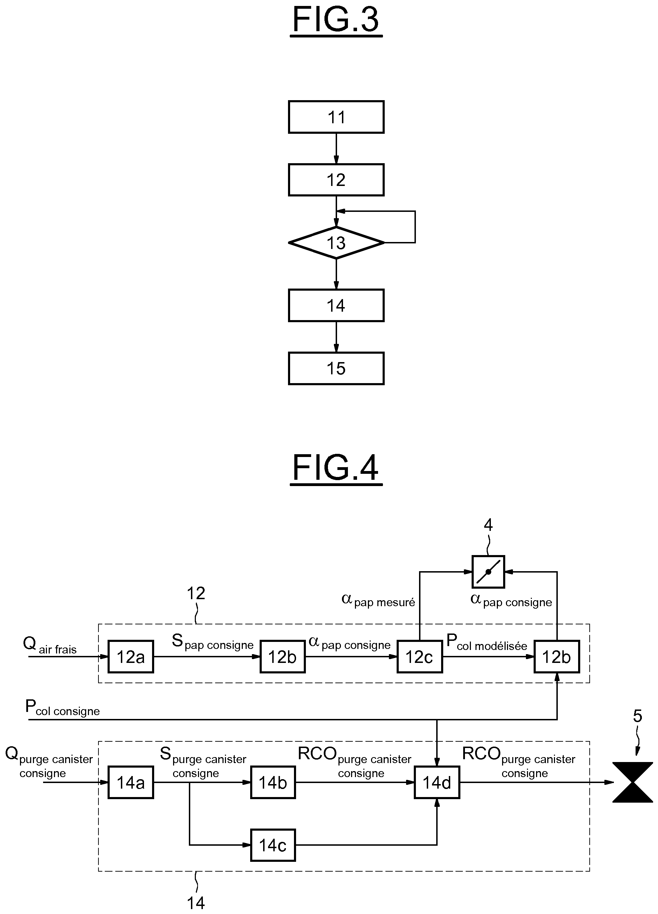

La figure 3 illustre les principales étapes du procédé de correction des dérives de la section aéraulique de la vanne 5 de purge canister, qui comprend des apprentissages successifs des défauts du système d'injection et du système d'admission d'air afin de pouvoir apprendre les défauts de la vanne 5 de purge canister.

Le procédé comprend une première étape 11 au cours de laquelle on ferme la vanne 5 de purge canister et on réalise un apprentissage des défauts du système d'injection. Celle-ci permet de recentrer l'information de richesse à l'échappement.

Au cours d'une deuxième étape 12, on réalise un apprentissage des défauts de l'admission d'air, notamment en déterminant les défauts de la vanne papillon 4. Les deux apprentissages précédents sont nécessairement réalisés sans purge canister, c'est-à-dire avec la vanne 5 de purge canister fermée, afin de ne pas être perturbés par l'absence de maîtrise de la composition de gaz provenant du canister.

Au cours d'une troisième étape 13, on ouvre la vanne de purge du canister 5 afin de vider complètement ce dernier du carburant et des gaz qu'il contient.

Lorsque le canister ne comporte plus aucune vapeur de carburant, au cours d'une quatrième étape 14, on réalise l'apprentissage de la section de la vanne 5 de purge canister, la vanne étant ouverte pour réaliser cet apprentissage.

Enfin, au cours d'une cinquième étape 15, on détermine la section aéraulique corrigée de la vanne 5 de purge canister.

La première étape 11 d'apprentissage des défauts du système d'injection va maintenant être décrite.

Avant de pouvoir réaliser l'apprentissage de la charge canister, il est nécessaire d'avoir corrigé les dérives du système d'injection car ces deux apprentissages sont basés sur l'observation du même signal (acl). Il faut donc s'assurer de ne pas apprendre les dérives du système d'injection dans l'apprentissage de purge canister.

Pour apprendre les défauts du système d'injection, on commande le moteur de sorte qu'il fonctionne à la stoechiométrie (pour un moteur à essence, cela correspond à un fonctionnement à richesse égale à 1), la masse de carburant commandée au système d'injection étant proportionnelle à la masse d'air enfermée dans le cylindre. Si une dérive du système d'injection apparait, elle est compensée par une boucle de richesse déterminant un facteur multiplicatif acl de la masse de carburant injectée.

Plus précisément, la richesse est régulée en boucle fermée autour d'une consigne égale à 1 grâce à un régulateur, généralement de type PI (proportionnel-intégral). En entrée, la régulation utilise une valeur de tension délivrée par une sonde à oxygène, également appelée sonde lambda, montée à l'échappement du moteur, généralement en amont des systèmes de traitement des gaz d'échappement comme par exemple un catalyseur trois voies, ladite tension étant représentative de la richesse des gaz de combustion du moteur. On détermine d'abord un signal d'erreur égal à la différence entre ladite tension mesurée et une consigne de tension correspondant à la richesse 1. La régulation emploie ce signal d'erreur afin d'émettre une correction de temps d'injection, qui s'ajoute au temps d'injection « de base » prédéterminé lors de la mise au point du moteur. Cette correction comporte un terme proportionnel et un terme intégral. La correction moyenne correspond à l'écart entre le temps d'injection modifié et le temps d'injection de base.

A l'issue de cette étape, on substitue au temps d'injection de base (prédéterminé lors de la mise au point) un temps d'injection de base modifié qui est égal au temps d'injection corrigé des défauts du système d'injection.

De cette façon, l'observation ultérieure de la boucle de correction de richesse sera reliée à l'influence du canister.

La deuxième étape 12 d'apprentissage des défauts de la chaîne d'air est décrite dans le document FR2907851, concernant la correction de la section aéraulique d'un papillon ou une vanne de régulation du débit d'air moteur. Il permet d'asservir la position d'ouverture du boîtier-papillon à la pression de l'air admis dans le moteur.

La quatrième étape 14 d'apprentissage de la section aéraulique de la vanne de purge canister va maintenant être décrite. La quatrième étape 14 débute alors que le canister est complètement purgé afin de s'assurer de la composition des gaz circulant par la vanne 5 de purge canister. En effet, le calcul du débit et en particulier le rapport des capacités thermiques $\gamma = Cp / Cv$, dépendent de la composition du gaz circulant à travers celle-ci. L'intérêt de purger intégralement le canister est de s'assurer que lors des apprentissages de la chaine d'air, seul de l'air frais circule à travers la vanne papillon 4 et à travers la vanne 5 de purge canister. Si le canister n'est pas vide lors des apprentissages, le mélange voit sa composition changer au cours du processus, ce qui biaise le résultat.

Deux méthodes d'apprentissage des défauts de la section aéraulique de la vanne 5 de purge canister sont alors exploitables, une utilisant un modèle de pression collecteur et une exploitant la dérive de richesse.

Un premier mode de réalisation du procédé comprend un apprentissage de la section aéraulique de la vanne de purge canister utilisant un modèle de pression collecteur va maintenant être décrit.

Lorsque le système (moteur, capteurs et actuateurs) est nominal, la consigne de pression aval ou de débit à travers la vanne 5 de purge canister est identique à la pression aval ou au débit mesuré. Si le système n'est plus nominal (dispersion de fabrication, d'assemblage, vieillissement, encrassement, etc.), la mesure de pression aval ou de débit à travers la vanne 5 de purge canister et la consigne de pression aval divergent.

On peut ainsi calculer à chaque instant par comparaison entre la consigne et la mesure un facteur correctif de débit qui va permettre d'effectuer une correction en boucle fermée.

Dans la suite de la description, on considère l'erreur de mesure entre la pression de consigne (notée Pcol modélisée) et une pression mesurée (notée Pcol mesurée). Le raisonnement serait similaire en comparant un débit de consigne et un débit mesuré.

L'erreur entre la mesure de la pression collecteur et la consigne de pression collecteur peut être attribuée aussi bien à la vanne papillon 4 de régulation de l'air (comme proposé dans le document FR2907851), qu'à la vanne 5 de purge canister en fonction du point de fonctionnement.

Afin de discriminer les sources d'erreur, il convient d'effectuer dans un premier temps l'apprentissage de la section aéraulique de la vanne papillon 4 lors d'un point de fonctionnement moteur sans purge canister. Ceci est réalisé lors de l'étape 12. L'erreur mesurée est alors due uniquement à une erreur de section aéraulique de la vanne papillon.

Dans un second temps, lors d'un point de fonctionnement moteur avec purge canister, au cours de l'étape 14, l'erreur résiduelle est attribuée uniquement à la section aéraulique de la vanne de purge canister.

On va maintenant décrire l'étape 12 d'apprentissage de la section aéraulique de la vanne papillon lors d'un point de fonctionnement moteur sans purge canister. On rappelle que ce cas est décrit plus en détail dans le document FR2907851.

Au cours d'une première sous étape 12a, on détermine d'abord la consigne de section d'ouverture de la vanne papillon notée $S_{\text{pap consigne}}$ à partir de l'équation de Barré Saint Venant tel que décrit en introduction, en fonction du débit d'air frais $Q_{\text{air frais}}$.

Au cours d'une deuxième sous étape 12b, on détermine une consigne de degré d'ouverture correspondant à la consigne de section d'ouverture de la vanne papillon $S_{\text{pap consigne}}$ en fonction d'une première cartographie.

Au cours d'une troisième sous étape 12c, on reconstitue par l'intermédiaire de la stratégie dite de « prédiction de pression » (Décrite dans les documents FR2907851 et FR2821388) une pression collecteur modélisée, notée $P_{\text{col modélisée}}$, à partir de la mesure de l'ouverture de la vanne papillon, notée $\alpha_{\text{pap mesuré}}$.

Au cours d'une quatrième sous étape 12d, on détermine un premier facteur correctif appliqué à l'ouverture $\alpha_{\text{pap}}$ de la vanne papillon en fonction de la consigne de pression collecteur $P_{\text{col consigne}}$ et de la pression collecteur modélisée sans purge canister $P_{\text{col modélisée}}$. Le facteur correctif est calculé par un régulateur PID, dont les valeurs des coefficients sont paramétrées en fonction de l'application concernée. On considère alors que toute dérive du système due à la vanne papillon est corrigée.

On va maintenant décrire l'étape 14 d'apprentissage de la section aéraulique de la vanne de purge canister lors d'un point de fonctionnement moteur après une purge canister :

Au cours d'une première sous étape 14a, on détermine la section aéraulique de la vanne de purge canister en fonction du débit de purge canister $Q_{\text{purge canister consigne}}$ déterminé par une stratégie de purge canister et de l'équation de Barré Saint Venant.

Au cours d'une deuxième sous-étape 14b, on détermine le rapport cyclique d'ouverture RCO de la vanne de purge canister en fonction de la section aéraulique de la vanne de purge canister et d'une cartographie donnant la correspondance entre le RCO appliqué et la section aéraulique de la vanne de purge canister.

Au cours d'une troisième étape 14c, on détermine la pression collecteur modélisée à partir de la section aéraulique estimée.

Au cours d'une quatrième étape 14d, on détermine un deuxième facteur correctif en fonction de la consigne de pression collecteur et de la pression collecteur modélisée avec purge canister. Le deuxième facteur correctif est ensuite appliqué au rapport cyclique d'ouverture de la vanne de purge canister.

Un autre mode de réalisation du procédé d'apprentissage de la section aéraulique de la vanne de purge canister utilisant une dérive de richesse va maintenant être décrit.

Le principe d'apprentissage par la dérive de richesse est similaire à l'apprentissage par prédiction de pression et/ou de débit. La seule différence réside dans l'estimation de l'erreur entre la section de la vanne de purge canister et sa valeur réelle. Lors du fonctionnement avec purge canister, l'erreur de section aéraulique est estimée à travers le décentrage de la boucle de richesse.

En faisant l'apprentissage de l'erreur de débit statique des injecteurs exclusivement sans purge canister (correction de la consigne de temps d'injection de base), toute nouvelle dérive de richesse est attribuée à la mauvaise estimation de la masse d'air introduite. De la même façon que précédemment, l'apprentissage de la section aéraulique de la vanne papillon se fait sans purge canister, au cours d'une étape 12. L'erreur relative à la vanne papillon étant corrigée, l'erreur de débit d'air après une purge canister est alors affectée à une mauvaise estimation de la section aéraulique de la vanne de purge canister.

Ce principe peut être appliqué en fonctionnement à richesse égale à 1 en boucle fermée avec une régulation utilisant une sonde lambda binaire, mais aussi quel que soit la richesse de consigne avec une régulation permanente utilisant une sonde de richesse proportionnelle.

La richesse Ri est égale au rapport massique entre le débit de carburant et d'air à la stoechiométrie :

$$ Ri = K \times \frac{M_{ess}}{M_{air}} \qquad (\text{Eq. } 3) $$

Avec :

K = Rapport stoechiométrique
$M_{ess}$ = Masse de carburant
$M_{air}$ Masse d'air frais admis

L'erreur de richesse est assimilée à une erreur de débit d'air, définie par l'équation suivante :

$$ \dot{M}_{air\ corrigée} = \dot{M}_{air\ estimée} \times Erreur\ moyenne\ (Ri) \qquad (\text{Eq. } 4) $$

Avec ;

$\dot{M}$air estimée = le débit d'air estimé
$\dot{M}$air corrigée = le débit d'air corrigé,
Erreur moyenne(Ri) = coefficient déterminé en fonction de la dérive de la mesure de richesse à l'échappement par rapport à la consigne de richesse.

Finalement, on en déduit l'erreur du débit de purge canister :

$$ \dot{M}_{purge\ canister\ corrigé} = \dot{M}_{total\ pompé} - \dot{M}_{air\ corrigé} \qquad (\text{Eq. } 5) $$

On en déduit ensuite la section aéraulique corrigée $S_{eff\ corrigée}$ de la vanne de purge canister au rapport cyclique d'ouverture donné :

$$S_{eff\ corrigée} = \frac{\dot{M}_{purge\ canister\ corrigé} \times \sqrt{T_{amont}}}{P_{amont} \times Cfe_{BSV}\left(\dfrac{P_{aval}}{P_{amont}}\right)} \qquad (Eq.\ 6)$$

Au cours de l'étape 14 d'apprentissage de l'erreur de la vanne de purge canister dans le deuxième mode de réalisation du procédé, on détermine donc d'abord un coefficient d'erreur moyenne de débit d'air à la richesse Ri Erreur moyenne(Ri) en fonction de mesures de richesse Ri, puis un débit d'air corrigé $\dot{M}_{air\ corrigée}$, en fonction de l'équation Eq. 4, du coefficient d'erreur moyenne de débit d'air à la richesse Ri, et du débit d'air estimé.
On détermine ensuite l'erreur du débit de purge canister en fonction de l'équation Eq. 5 et de de l'erreur de débit d'air $\dot{M}_{air\ corrigée}$.

Enfin, on détermine une section aéraulique corrigée $S_{eff\ corrigée}$ de la vanne de purge canister au rapport cyclique d'ouverture donné par application de l'équation de Barré Saint Venant tel qu'illustré par l'équation Eq. 6.

La quatrième étape 14 d'apprentissage de la section aéraulique de la vanne de purge canister utilisant une dérive de richesse permet ainsi de déterminer une section aéraulique corrigée de la vanne de purge canister, substituée ensuite dans la stratégie de commande de la dite vanne.

## Revendications

1. Procédé de commande d'un moteur à combustion interne muni d'un dispositif de traitement de gaz (3a) apte à récolter les vapeurs de carburant provenant d'un réservoir (3b) de carburant et comprenant une conduite (2) de sortie connectée au collecteur d'admission (7) du moteur à combustion interne (8), une vanne de purge (5) étant disposée sur la conduite (2) de sortie du dispositif de traitement, le moteur à combustion interne étant par ailleurs alimenté par une conduite (1) d'admission d'air frais munie d'une vanne papillon (4),
un capteur de pression (6) étant apte à déterminer la pression dans le collecteur d'admission (7),
**caractérisé par le fait qu'**il comprend les étapes suivantes :

   on ferme la vanne (5) de purge canister et l'on réalise un apprentissage des défauts du système d'injection de carburant,
   on réalise un apprentissage des défauts de section aéraulique de la vanne papillon (4),
   on ouvre la vanne de purge (5) afin de vider le dispositif de traitement du carburant et des gaz qu'il contient,
   lorsque le dispositif de traitement ne comporte plus de vapeur de carburant, on réalise l'apprentissage de la section de la vanne (5) de purge canister, la vanne étant maintenue ouverte pour réaliser cet apprentissage,
   on détermine la section aéraulique corrigée de la vanne (5) de purge en déterminant un facteur correctif fonction d'une consigne de pression du collecteur et d'une pression du collecteur modélisée avec purge ou en utilisant une dérive de richesse.

2. Procédé selon la revendication précédente, dans lequel, pour l'apprentissage des défauts du système d'injection, on commande le moteur de sorte qu'il fonctionne à la stoechiométrie,
on détermine un signal d'erreur égal à la différence entre la mesure d'une sonde de richesse montée à l'échappement du moteur à combustion interne et une consigne de richesse correspondant à la richesse unité, et
on corrige la durée d'injection en fonction de ce signal d'erreur.

3. Procédé selon la revendication 2, dans lequel, pour apprendre les défauts de la section aéraulique de la vanne papillon (4) lors d'un point de fonctionnement moteur sans purge, après avoir appris les défauts du système d'injection, on réalise les étapes suivantes :

   on détermine la consigne de section d'ouverture de la vanne papillon (4) à partir de l'équation de Barré Saint Venant,
   on détermine une consigne de degré d'ouverture correspondant à la consigne de section d'ouverture de la vanne papillon (4) en fonction d'une première cartographie,
   on reconstitue, par l'intermédiaire d'une stratégie de prédiction de pression, une pression de collecteur modélisée sans purge canister à partir de la mesure de l'ouverture de la vanne papillon (4), et

on détermine un premier facteur correctif appliqué à l'ouverture de la vanne papillon (4) en fonction de la consigne de pression de collecteur et de la pression de collecteur modélisée sans purge canister.

4. Procédé selon la revendication 3, dans lequel, pour réaliser l'apprentissage de la section aéraulique de la vanne de purge (5) lors d'un point de fonctionnement moteur après une purge, après avoir réalisé l'apprentissage des défauts du système d'injection et des défauts de la section aéraulique de la vanne papillon (4), on réalise les étapes suivantes :

on détermine la section aéraulique de la vanne de purge (5) en fonction du débit de purge déterminé par une stratégie de purge et de l'équation de Barré Saint Venant,
on détermine le rapport cyclique d'ouverture de la vanne de purge (5) en fonction de la section aéraulique de la vanne de purge (5) et d'une cartographie donnant la correspondance entre le rapport cyclique d'ouverture appliqué et la section aéraulique de la vanne de purge,
on détermine une pression collecteur modélisée avec purge à partir de la section aéraulique estimée,
on détermine un deuxième facteur correctif en fonction de la consigne de pression de collecteur et de la pression de collecteur modélisée avec purge, puis
on applique le deuxième facteur correctif au rapport cyclique d'ouverture de la vanne de purge (5).

5. Procédé selon la revendication 3, dans lequel, pour réaliser l'apprentissage de la section aéraulique de la vanne de purge (5) lors d'un point de fonctionnement moteur après une purge,
après avoir réalisé l'apprentissage des défauts du système d'injection et des défauts de la section aéraulique de de la vanne papillon (4), on réalise les étapes suivantes :

on détermine un coefficient d'erreur moyenne de débit d'air à la richesse courante en fonction de mesures de richesse,
on détermine un débit d'air corrigé en fonction du coefficient d'erreur moyenne de débit d'air à la richesse courante, et du débit d'air estimé,
on détermine l'erreur du débit de purge en fonction de l'erreur de débit d'air et du débit total d'air admis, et
on détermine une section aéraulique corrigée de la vanne de purge (5) au rapport cyclique d'ouverture donné par application de l'équation de Barré Saint Venant à l'erreur du débit de purge.

**Patentansprüche**

1. Verfahren zur Steuerung eines Verbrennungsmotors, der mit einer Gasaufbereitungsvorrichtung (3a) ausgestattet ist, die geeignet ist, die von einem Kraftstofftank (3b) kommenden Kraftstoffdämpfe aufzufangen, und die eine Auslassleitung (2) umfasst, die an den Ansaugkrümmer (7) des Verbrennungsmotors (8) angeschlossen ist, wobei ein Entlüftungsventil (5) an der Auslassleitung (2) der Aufbereitungsvorrichtung angeordnet ist, wobei der Verbrennungsmotor im Übrigen über eine mit einer Drosselklappe (4) versehene Frischluftansaugleitung (1) versorgt wird, wobei ein Drucksensor (6) geeignet ist, den Druck im Ansaugkrümmer (7) zu bestimmen,
**dadurch gekennzeichnet, dass** es die folgenden Schritte umfasst:

man schließt das Tankentlüftungsventil (5) und man führt ein Einlernen der Fehler des Kraftstoffeinspritzsystems aus,
man führt ein Einlernen der Luftströmungsquerschnittsfehler der Drosselklappe (4) aus,
man öffnet das Entlüftungsventil (5), um die Aufbereitungsvorrichtung von dem Kraftstoff und den Gasen, die sie enthält, zu entleeren,
wenn die Aufbereitungsvorrichtung keinen Kraftstoffdampf mehr enthält, führt man das Einlernen des Querschnitts des Tankentlüftungsventils (5) aus, wobei das Ventil zum Ausführen dieses Einlernens offengehalten wird,
man bestimmt den korrigierten Luftströmungsquerschnitt des Entlüftungsventils (5), indem man einen Korrekturfaktor bestimmt, der von einem Drucksollwert des Krümmers und von einem modellierten Druck des Krümmers mit Entlüftung abhängig ist, oder indem man eine Verbrennungsluftverhältnisabweichung verwendet.

2. Verfahren nach dem vorhergehenden Anspruch, wobei man zum Einlernen der Fehler des Einspritzsystems den Motor so steuert, dass er stöchiometrisch arbeitet,
man ein Fehlersignal bestimmt, das gleich der Differenz zwischen der Messung einer am Auspuff des Verbrennungsmotors montierten Lambdasonde und einem dem Verbrennungsluftverhältnis von 1 entsprechenden Verbrennungsluftverhältnissollwert ist, und

man die Einspritzdauer in Abhängigkeit von diesem Fehlersignal korrigiert.

3. Verfahren nach Anspruch 2, wobei man zum Einlernen der Fehler des Luftströmungsquerschnitts der Drosselklappe (4) bei einem Motorbetriebspunkt ohne Entlüftung, nachdem die Fehler des Einspritzsystems eingelernt wurden, die folgenden Schritte ausführt:

man bestimmt den Öffnungsquerschnittsollwert der Drosselklappe (4) anhand der Barre-Saint-Venant-Gleichung,

man bestimmt einen Öffnungsgradsollwert, der dem Öffnungsquerschnittsollwert der Drosselklappe (4) entspricht, in Abhängigkeit von einer ersten Kartographie,

man rekonstruiert über eine Druckvorhersagestrategie einen modellierten Krümmerdruck ohne Tankentlüftung anhand der Messung der Öffnung der Drosselklappe (4) und

man bestimmt einen ersten Korrekturfaktor, der auf die Öffnung der Drosselklappe (4) in Abhängigkeit vom Krümmerdrucksollwert und vom modellierten Krümmerdruck ohne Tankentlüftung angewendet wird.

4. Verfahren nach Anspruch 3, wobei man zum Ausführen des Einlernens des Luftströmungsquerschnitts des Entlüftungsventils (5) bei einem Motorbetriebspunkt nach einer Entlüftung, nachdem man das Einlernen der Fehler des Einspritzsystems und der Fehler des Luftströmungsquerschnitts der Drosselklappe (4) ausgeführt hat, die folgenden Schritte ausführt:

man bestimmt den Luftströmungsquerschnitt des Entlüftungsventils (5) in Abhängigkeit von der Entlüftungsdurchflussmenge, die mit einer Entlüftungsstrategie und der Barre-Saint-Venant-Gleichung bestimmt wird,

man bestimmt das Öffnungstastverhältnis des Entlüftungsventils (5) in Abhängigkeit vom Luftströmungsquerschnitt des Entlüftungsventils (5) und einer Kartographie, die die Entsprechung zwischen dem angewandten Öffnungstastverhältnis und dem Luftströmungsquerschnitt des Entlüftungsventils gibt,

man bestimmt einen modellierten Krümmerdruck mit Entlüftung anhand des geschätzten Luftströmungsquerschnitts,

man bestimmt einen zweiten Korrekturfaktor in Abhängigkeit vom Krümmerdrucksollwert und vom modellierten Krümmerdruck mit Entlüftung, und dann

wendet man den zweiten Korrekturfaktor auf das Öffnungstastverhältnis des Entlüftungsventils (5) an.

5. Verfahren nach Anspruch 3, wobei man zum Ausführen des Einlernens des Luftströmungsquerschnitts des Entlüftungsventils (5) bei einem Motorbetriebspunkt nach einer Entlüftung

nach dem Ausführen des Einlernens der Fehler des Einspritzsystems und der Fehler des Luftströmungsquerschnitts der Drosselklappe (4) die folgenden Schritte ausführt:

man bestimmt einen mittleren Fehlerkoeffizienten der Luftdurchflussmenge für das übliche Verbrennungsluftverhältnis in Abhängigkeit von Verbrennungsluftverhältnismessungen,

man bestimmt eine korrigierte Luftdurchflussmenge in Abhängigkeit vom mittleren Fehlerkoeffizienten der Luftdurchflussmenge für das übliche Verbrennungsluftverhältnis und von der geschätzten Luftdurchflussmenge,

man bestimmt den Fehler der Entlüftungsdurchflussmenge in Abhängigkeit vom Luftdurchflussmengenfehler und von der Ansaugluftgesamtdurchflussmenge und

man bestimmt einen korrigierten Luftströmungsquerschnitt des Entlüftungsventils (5) für das Öffnungstastverhältnis, das durch Anwenden der Barre-Saint-Venant-Gleichung auf den Fehler der Entlüftungsdurchflussmenge gegeben wird.

## Claims

1. Method for controlling an internal combustion engine provided with a gas treatment device (3a) capable of harvesting the fuel vapours originating from a fuel tank (3b) and comprising an output duct (2) connected to the intake manifold (7) of the internal combustion engine (8), a bleed valve (5) being positioned on the output duct (2) of the treatment device, the internal combustion engine being also fed by a cool air intake duct (1) provided with a butterfly valve (4), a pressure sensor (6) being capable of determining the pressure in the intake manifold (7),

**characterized by** the fact that it comprises the following steps:

the canister bleed valve (5) is closed and the defects of the fuel injection system are learned,

the aeraulic section defects of the butterfly valve (4) are learned,

the bleed valve (5) is opened to drain the treatment device of the fuel and of the gases that it contains,

when the treatment device no longer includes any fuel vapour, the section of the canister bleed valve (5) is learned, with the valve being held open to perform this learning,

the corrected aeraulic section of the bleed valve (5) is determined by determining a corrective factor that is a function of a pressure setpoint of the manifold and of a pressure of the manifold modelled with bleed or by using a richness drift.

2.  Method according to the preceding claim, in which, for the learning of the defects of the injection system, the motor is controlled such that it operates with stoichiometry,

an error signal is determined that is equal to the difference between the measurement of a richness probe mounted at the exhaust of the internal combustion engine and a richness setpoint corresponding to the unit richness, and the injection time is corrected as a function of this error signal.

3.  Method according to Claim 2, in which, to learn the defects of the aeraulic section of the butterfly valve (4) at an engine operating point without bleed, after having learned the defects of the injection system, the following steps are performed:

the butterfly valve (4) opening section setpoint is determined from the Barre Saint Venant equation,

an opening degree set point corresponding to the butterfly valve (4) opening section setpoint is determined as a function of a first mapping,

a pressure prediction strategy is used as a basis for reconstructing a manifold pressure modelled without canister bleed from the measurement of the opening of the butterfly valve (4), and

a first corrective factor applied to the opening of the butterfly valve (4) is determined as a function of the manifold pressure setpoint and of the manifold pressure modelled without canister bleed.

4.  Method according to Claim 3, in which, to perform the learning of the aeraulic section of the bleed valve (5) at an engine operating point after a bleed, after having performed the learning of the defects of the injection system and of the defects of the aeraulic section of the butterfly valve (4), the following steps are performed:

the aeraulic section of the bleed valve (5) is determined as a function of the bleed rate determined by a bleed strategy and of the Barre Saint Venant equation,

the opening duty cycle of the bleed valve (5) is determined as a function of the aeraulic section of the bleed valve (5) and of a mapping giving the correlation between the opening duty cycle applied and the aeraulic section of the bleed valve,

a manifold pressure modelled with bleed is determined from the estimated aeraulic section,

a second corrective factor is determined as a function of the manifold pressure setpoint and of the manifold pressure modelled with bleed, then

the second corrective factor is applied to the opening duty cycle of the bleed valve (5).

5.  Method according to Claim 3, in which, to perform the learning of the aeraulic section of the bleed valve (5) at an engine operating point after a bleed,

after having performed the learning of the defects of the injection system and of the defects of the aeraulic section of the butterfly valve (4), the following steps are performed:

an average air flow rate error coefficient at the current richness is determined as a function of richness measurements,

a corrected air flow rate is determined as a function of the average air flow rate error coefficient at the current richness, and of the estimated air flow rate,

the bleed rate error is determined as a function of the air flow rate error and of the total flow rate of air taken in, and

a corrected aeraulic section of the bleed valve (5) at the given opening duty cycle is determined by application of the Barre Saint Venant equation to the bleed rate error.

## FIG.1

## FIG.2

# FIG.3

```
        ┌──────────┐
        │    11    │
        └──────────┘
              │
              ▼
        ┌──────────┐
        │    12    │
        └──────────┘
              │
              ▼
          ◇──────◇◄────┐
          ◇  13  ◇─────┘
          ◇──────◇
              │
              ▼
        ┌──────────┐
        │    14    │
        └──────────┘
              │
              ▼
        ┌──────────┐
        │    15    │
        └──────────┘
```

# FIG.4

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 20070199372 A1
- FR 2907851
- US 2013184972 A
- US 2009100828 A
- FR 2821388